# EUROPÄISCHE PATENTANMELDUNG

(11) **EP 1 106 880 A2**
(43) Veröffentlichungstag der Anmeldung: **13.06.2001**
(21) Anmeldenummer: 00125939.9
(22) Anmeldetag: 28.11.2000
(51) Int. Cl.: F16K 17/196

(54) **Luftventil**

(30) Priorität: 01.12.1999 DE 19957683
(71) Anmelder: Wahl, Edwin, 71579 Spiegelberg-Jux (DE)
(72) Erfinder: Wahl, Edwin, 71579 Spiegelberg-Jux (DE)
(74) Vertreter: Winter, Martina Dr.

(57) **Zusammenfassung**

Die vorliegende Erfindung betrifft ein Luftventil (10) mit einem ein Gehäuseunterteil (12) und ein Gehäuseoberteil (14) aufweisenden Ventilgehäuse (11), wobei das Gehäuseunterteil (12) eine Zuluftöffnung (13) und das Gehäuseoberteil (14) eine Abluftöffnung (15) aufweisen und das Ventilgehäuse (11) ein Ventilsystem (20) umschließt. Erfindungsgemäß ist vorgesehen, daß das Ventilsystem (20) ein Verschlußelement (21) mit mindestens zwei Öffnungen (22, 23a-d) aufweist, wobei eine oder mehrere Öffnungen (22, 23 a-d) zuluftseitig und die verbleibende Öffnung bzw. die verbleibenden Öffnungen abluftseitig durch Dichtungen (30, 31) verschlossen sind, durch Beaufschlagung mit Überdruck oder Unterdruck entfernbar sind. Das erfindungsgemäße Luftventil eignet sich insbesondere zur Verwendung in Tanklüftungsanlagen für den Heizungsbau.

## Beschreibung

Die vorliegende Erfindung betrifft ein Luftventil mit einem ein Gehäuseunterteil und ein Gehäuseoberteil aufweisenden Ventilgehäuse, wobei das Gehäuseunterteil eine Zuluftöffnung und das Gehäuseoberteil eine Abluftöffnung aufweisen und das Ventilgenäuse ein Ventiisvstem umschließt.

Derartige Luftventile sind bekannt. Sie werden z. Bsp. in Lüftungsanlagen für Lagerbehälter für Flüssigkeiten eingesetzt. Die im Stand der Technik bekannten Ventile verhindern, daß Umgebungsluft, Feuchtigkeit oder Fremdstoffe in den Behälter eindringen. Sie können aber nur einen Druckausgleich in einer Richtung herbeiführen, also je nach ihrem Aufbau nur einen Unterdruck oder einen Überdruck im Behälter regulieren.

Die Aufgabe der vorliegenden Erfindung besteht daher darin, ein gattungsgemäßes Luftventii derart weiterzuentwickeln, daß ein Druckausgleich in beiden Richtungen möglich ist.

Die Lösung besteht in einem Luftventil mit den Merkmalen des Anspruchs 1. Erfindungsgemäß ist also vorgesehen, daß das Ventilsystem ein Verschlußelement mit mindestens zwei Öffnungen aufweist, wobei eine oder mehrere Öffnungen zuluftseitig und die verbleibende Öffnung bzw. die verbleibenden Öffnungen abluftseitig durch Dichtungen verschlossen sind, die durch Beaufschlagung mit Überdruck oder Unterdruck entfernbar sind.

Das erfindungsgemäße Luftventil zeichnet sich dadurch aus, daß es im Ruhezustand beidseitig geschlossen ist, so daß kein Ausgasen des Behälterinhalts möglich ist. Ferner wird für einen Druckausgleich im Behälter gesorgt, denn der Behälterinhalt kann bei Überdruck nach außen austreten, während bei Unterdruck im Behälter Luft von außen angesaugt wird. Das Luftventil ist darüber hinaus einfach konstruiert und somit preisgünstig und wenig störungsanfällig.

Vorteilhafte Weiterbildungen ergeben sich aus den Unteransprüchen. Eine bevorzugte Ausführungsform sieht vor, daß die Dichtungen des Ventilsystems zuluftseitig durch Beaufschlagung mit Überdruck und abluftseitig durch Beaufschlagung mit Unterdruck entfernbar sind.

Das Verschlußelement ist vorzugsweise scheibenförmig und weist mindestens zwei Öffnungen auf, bspw. eine zentrale Öffnung und mindestens eine periphere Öffnung aufweist. Die zentrale Öffnung kann von der zuluftseitig angeordneten Dichtung und die mindestens eine periphere Öffnung von der abluftseitig angeordneten Dichtung verschlossen sein. Eine umgekehrte Anordnung der Dichtungen ist selbstverständlich ebenfalls möglich.

Eine weitere bevorzugte Weiterbildung besteht darin, daß im Ventilsystem ferner elastische Elemente, bspw. Federn, vorgesehen sind, welche die Dichtungen gegen das Verschlußelement pressen. Die elastischen Elemente können hierbei auf ihrer der jeweiligen Dichtung abgewandten Seite mit einem im Ventilgehäuse verankerten, längsverschieblichen, mindestens eine Öffnung aufweisenden Führungselement fest verbunden sein. Ferner kann ein weiteres, mindestens eine Öffnung aufweisendes Führungselement vorgesehen sein, welches mit einerseits mit einer Dichtung und andererseits einem elastischen Element verbunden ist. Dies ist besonders vorteilhaft, wenn die Luftscheibe eine zentrale Öffnung aufweist, die Dichtung aber die mindestens eine periphere Öffnung abdecken soll und daher ebenfalls eine mit der zentralen Öffnung fluchtende Ausnehmung aufweist. So kann das elastische Element auf einfache Weise mit der Dichtung verbunden werden. Die Führungselemente des Ventilsystems sind bevorzugt als Führungsscheiben ausgebildet.

Das Ventilsystem des erfindungsgemäßen Luftventils kann schließlich eine entlang der Längsachse des Ventilgehäuses angeordnete Führungsnadel aufweisen, entlang derer die weiteren Elemente des Ventilsystems angeordnet sind.

Das erfindungsgemäße Luftventil findet bevorzugt Verwendung in Lüftungsanlagen, vorzugsweise für Behälter, bspw. in Tanklüftungsanlagen für den Heizungsbau, insbesondere für Haustank-Lüftungsanlagen.

Im folgenden wird ein Ausführungsbeispiel der vorliegenden Erfindung anhand der beigefügten Zeichnungen näher beschrieben. Es zeigen:
- Figur 1: einen Längsschnitt durch eine Ausführungsform des erfindungsgemäßen Luftventils;
- Figur 2a: eine Draufsicht auf eine Luftscheibe;
- Figur 2b: einen Schnitt durch die Luftscheibe entlang der Linie llb - llb in Figur 2a;
- Figur 3a: eine Draufsicht auf eine erste Führungsscheibe;
- Figur 3b: einen Schnitt durch die erste Führungsscheibe entlang der Linie IIIb - IIIb in Figur 3a:
- Figur 4a: eine Draufsicht auf eine zweite Führungsscheibe;
- Figur 4b: einen Schnitt durch die zweite Führungsscheibe entlang der Linie IVb - IVb in Figur 4a;
- Figur 5a: einen Schnitt durch eine erste Dichtung;
- Figur 5b: einen Schnitt durch eine zweite Dichtung;
- Figur 6: eine Seitenansicht einer Führungsnadel.

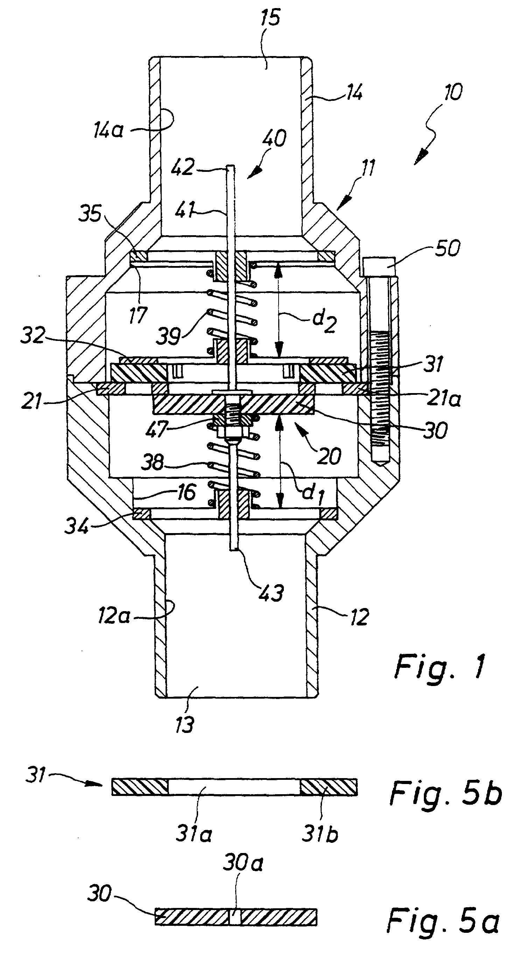

Der Aufbau einer Ausführungsform eines erfindungsgemäßen Luftventils 10 ergibt sich aus den Figuren 1 bis 5. Das Luftventil 10 weist ein Ventilgehäuse 11 mit einem Gehäuseunterteil 12 und einem Gehäuseoberteil 14 auf. Im Ausführungsbeispiel weist das Gehäuseunterteil 12 eine Zuluftseite 13 und das Gehäuseoberteil 14 eine Abluftseite 15 auf. Bei Verwendung des Luftventils 10 bspw. in einer Tanklüftungsanlage im Heizungsbau oder ähnlichen Anlagen mündet die Zuluftseite 13 in einen Heizöltank o. dgl., während die Abluftseite 15 mit der Außenluft in Verbindung steht. Das Gehäuseunterteil 12 und das Gehäuseoberteil 14 sind durch mehrere Schrauben 50 fest miteinander verbunden.

Im Inneren des Ventilgehäuses 11 ist ein Ventilsystem 20 vorgesehen, welches aus Führungsscheiben 32, 34, 35, einer Luftscheibe 21, zwei Dichtungen 30, 31 zwei Federn 38, 39 und einer Führungsnadel 40 zusammengesetzt ist.

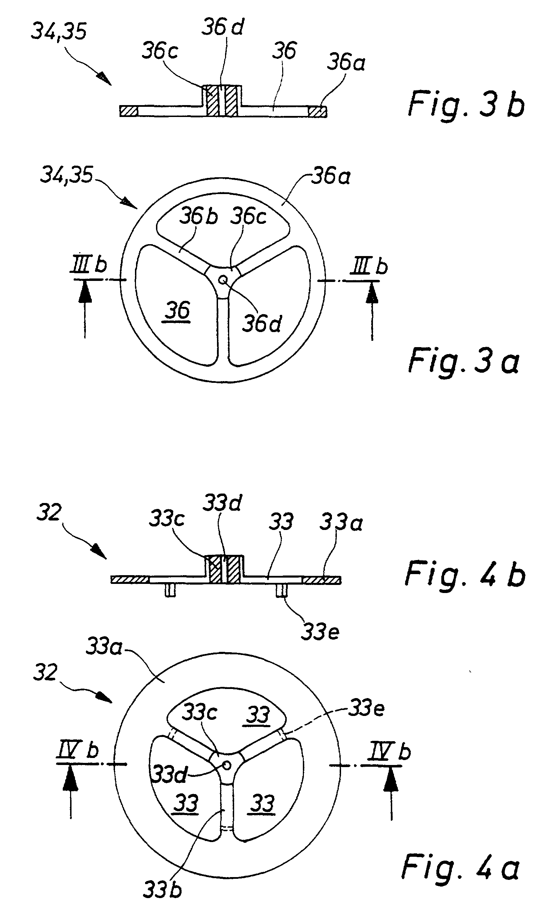

Im Ventilgehäuse 11 sind zwei Führungsscheiben 34, 35 angebracht, deren Aufbau aus den Figuren 3a und 3b ersichtlich ist. Die Führungsscheiben 34, 35 sind als kreisförmige, rotationssymmetrische flache Scheiben mit drei Öffnungen 36 ausgebildet, so daß sich ein äußerer Rand 36a und drei Stege 36b ergeben, welche im Zentrum der Führungsscheibe 34, 35 aufeiandertreffen und eine Federführung 36c bilden. Durch die Federführung 36c verläuft eine Durchgangsbohrung 36d.

In der Innenwand 12a des Gehäuseunterteils 12 und in der Innenwand 14a des Gehäuseoberteils 14 des Ventilgehäuses 11 sind zwei Ventilsitze 16, 17 in Form von Hinterschneidungen angebracht, in welchen die Führungsscheiben 34, 35 eingesetzt sind. Die Hinterschneidungen dienen als Anschlagflächen, welche verhindern, daß die Führungsscheiben 34, 35 in Richtung der Zuluftseite 13 bzw. der Abluftseite 15 aus dem Ventilgehäuse 11 herausgleiten können.

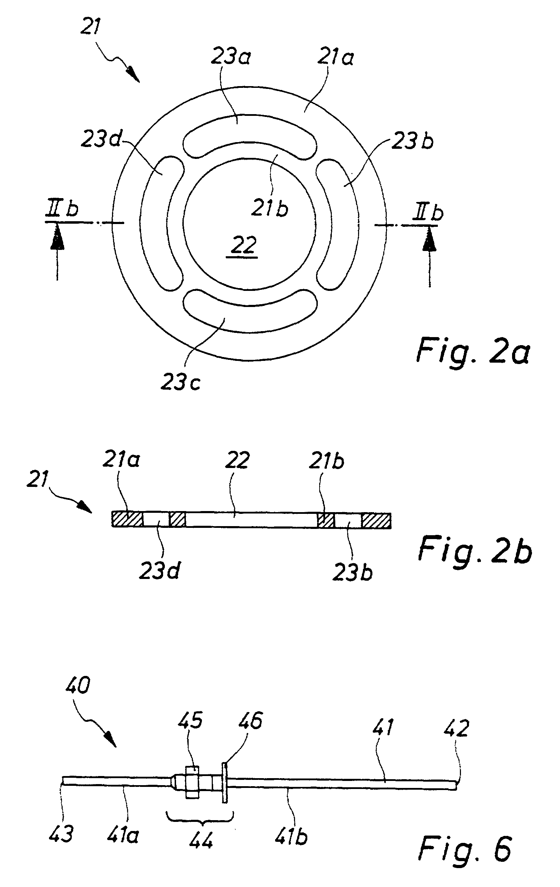

Im Inneren des Ventilgehäuses 20 befindet sich ferner eine Luftscheibe 21, welche mit ihrem äußeren Rand 21a zwischen dem Gehäuseunterteil 12 und dem Gehäuseoberteil 14 verklemmt ist. Der Aufbau der Luftscheibe 21a ergibt sich aus den Figuren 2a und 2b. Die Luftscheibe 21 ist wie die Führungsscheiben 34, 35 in Form einer flachen, kreisförmigen Scheibe ausgebildet und weist eine zentrale Öffnung 22 auf. Rund um diese zentrale Öffnung 22 sind vier weitere Öffnungen 23a bis d in Form von Langlöchern vorgesehen, so daß sich ein etwas breiterer äußerer Rand 21a sowie ein schmaler innerer Rand 21 b ergeben.

Die vier Öffnungen 23 a bis d sind abluftseitig mit einer Dichtung 31 verschlossen, welche ebenfalls scheibenförmig ausgebildet ist und eine mit der zentralen Öffnung 22 der Luftscheibe fluchtende mittige Öffnung 31a aufweist, so daß sich ein Dichtungsring 31b ergibt, welcher auf dem äußeren Rand 21a und dem inneren Rand 21b der Luftscheibe 21 aufliegt und die vier Öffnungen 23a bis d vollständig bedeckt (vgl. Figur 5b). Die Dichtung 31 weist auf ihrer der Luftscheibe 21 abgewandten Seite eine weitere Führungsscheibe 32 auf, deren Aufbau sich aus den Figuren 4a und 4b ergibt. Ähnlich wie die Führungsscheiben 34, 35 ist die Führungsscheibe 32 als kreisförmige, rotationssymmetrische flache Scheibe mit drei Öffnungen 33 ausgebildet, so daß sich ein äußerer Rand 33a ergibt, der breiter ist als der äußere Rand 36a der Führungsscheiben 34, 35. Ferner sind ebenfalls drei Stege 33b ausgebildet, welche im Zentrum der Führungsscheibe 32 aufeiandertreffen und eine Federführung 33c bilden. Durch die Federführung 33c verläuft eine Durchgangsbohrung 33d. Schließlich ist auf der Unterseite jedes Steges 33b je ein Zentrierstift 33e vorgesehen. Die Zentrierstifte 33e ragen im Ventilsystem 20 durch die mittige Öffnung 31a der Dichtung 31 hindurch und zentrieren diese.

Die zentrale Öffnung 22 der Luftscheibe 21 ist zuluftseitig mit einer weiteren Dichtung 30 verschlossen, welche auf dem inneren Rand 21b der Luftscheibe 21 aufliegt und die zentrale Öffnung 22 vollständig bedeckt (vgl. Figur 5a). Die Dichtung 30 weist ferner ebenfalls eine mittige Durchgangsbohrung 30a auf.

Zum Zusammenfügen des Ventilsystems 20 wird die Dichtung 30 auf einer Führungsnadel 40 aufgenommen, welche in Figur 6 dargestellt ist. Die Führungsnadel 40 weist einenSchaft 41 mit einem abluftseitigen Ende 42 und einem zuluftseitigen Ende 43 auf. Auf dem Schaft 41, etwas näher zum zuluftseitigen Ende 43 hin, ist eine Halterung 44 für die Dichtung 30 in Form einer Mutter 45 und einer Haltescheibe 46 angebracht. Zum Befestigen der Dichtung 30 wird zunächst die Mutter 45 vom Schaft 41 abgeschraubt. Dann wird die Dichtung 30 auf den Schaft 41 aufgesteckt, bis sie an der Haltescheibe 46 anliegt. Dann wird ein scheibenförmiger Abstandhalter 47, dessen Durchmesser in etwa demjenigen der Mutter 45 entspricht, auf den Schaft 41 aufgesteckt, bis er an der Dichtung 30 anliegt. Zum Schluß wird die Mutter 45 wieder auf den Schaft 41 geschraubt, so daß der Abstandhalter 47 fest auf der Dichtung 30 aufliegt. Die Dichtung 30 wird nun zwischen Abstandhalter 47 und Haltescheibe 46 klemmend gehalten. Die Mutter 45 und der Abstand 47 dienen gleichzeitig als Federführung (s. unten).

Die Luftscheibe 21 wird abluftseitig auf die so befestigte Dichtung 30 aufgelegt, so daß der innere Rand 21b der Luftscheibe auf der Dichtung 30 zu liegen kommt und die zentrale Öffnung 22 von der Dichtung 30 vollständig verschlossen ist. Im Anschluß daran wird die Dichtung 31 ebenfalls abluftseitig auf die Luftscheibe 21 aufgelegt, so daß die vier Öffnungen 23a bis d vollständig bedeckt sind und die Führungsscheibe 32 mit der mittigen Durchgangsbohrung 33d auf die Führungsnadel 40 aufgefädelt, so daß die Stege 33e durch die mittige Öffnung 31a der Dichtung 31 ragen und die Federführung 33c der Abluftseite 15 zugewandt ist. Zum Abschluß werden auf die gleiche Weise die Führungsscheiben 34, 35 auf das zuluftseitige Ende 43 und das abluftseitige Ende 42 des Schaftes 41 aufgefädelt, so daß die Federführungen 36c ins Innere des Ventilgehäuses 11 hineinragen.

Die Mutter 45 und der Abstandhalter 47 auf der Führungsnadel 40 sowie die Federführungen 33c, 36c auf den Führungsscheiben 32, 34, 35 dienen als Federsitze für zwei Federn 38, 39, welche zwischen der zuluftseitigen Führungsscheibe 34 und der Dichtung 30 bzw. der abluftseitigen Führungsscheibe 35 und der Dichtung 31 bzw. der Führungsscheibe 32 angeordnet sind.

Das vollständig auf der Führungsnadel 40 zusammengefügte Ventiisvstem 20 wird in das Gehäuseunterteil 12 des Ventilgehäuses 11 eingesetzt, so daß die Führungsscheibe 34 in der Hinterschneidung 16 zu liegen kommt. Dann wird das Gehäuseoberteil 14 aufgesetzt, so daß die Führungsscheibe 35 in der Hinterschneidung 17 zu liegen kommt und mit dem Gehäuseunterteil 12 verschraubt.

Die Federn 38, 39 pressen im Ruhezustand des Luftventils 10 die Dichtungen 30, 31 gegen die Öffnungen 22, 23a bis d der Luftscheibe und gleichzeitig die Führungsscheiben 34, 35 gegen die Hinterschneidungen 16, 17 in der Innenwand des Ventilgehäuses 11 und sorgen so dafür, daß das Luftventil 10 beidseitig geschlossen ist. Bei Überdruck im Gehäuseunterteil 12 auf der Zuluftseite 13, bspw. bei der Befüllung eines Heizöltanks, strömt die Luft bzw. das Gas durch die Öffnungen 36 der Führungsscheibe 34 und die vier Öffnungen 23a bis d der Luftscheibe 21 und drückt die Dichtung 31 sowie die Führungsscheibe 32 gegen die Federkraft der Feder 39 nach oben. Die Luft bzw. das Gas kann dann über die Öffnungen 23a bis d der Luftscheibe und die mittige Öffnung 31a der Dichtung 31 sowie über die Öffnungen 33 der Führungsscheibe 32 zur Abluftseite 15 hin abströmen. Bei Unterdruck im Gehäuseunterteil 12 auf der Zuluftseite 13, bspw. bei Tankentleerung durch die Saugleitung des Brenners einer Ölheizung, drückt der Atmosphärenüberdruck im Gehäuseoberteil 14 auf der Abluftseite 15 durch die Öffnungen 36 der Führungsscheibe 35 und die Öffnungen 33 der Führungsscheibe 32 sowie durch die zentrale Öffnung 22 der Luftscheibe 21 auf die Dichtung 30. Die Dichtung 30 und die Führungsnadel 40 werden nach unten gedrückt, und die Luft kann in den Tank einströmen.

Der jeweilige Arbeitsdruck des erfindungsgemäßen Luftventils bei Überdruck bzw. Unterdruck im Gehäuseunterteil läßt sich relativ einfach berechnen. Gegeben seien eine Querschnittfläche der zentralen Öffnung 22 der Luftscheibe 21 von 9 cm² bei einem Durchmesser von 34 mm und eine Querschnittfläche der Öffnungen 23a bis d der Luftscheibe 21 von 9,72 cm² (2,43 cm² pro Öffnung bei einem Durchmesser von 7 mm). Gegeben sei ferner ein Abstand d₁ zwischen der Dichtung 31 und der Führungsscheibe 34 sowie ein Abstand d₂ zwischen der Führungsscheibe 32 und der Führungsscheibe 34 von 24,5 mm. Für das Ausführungsbeispiel wurden ferner Federn der Fa. Gutekunst vom Typ VD-090W-02 mit einer Länge L₀ von 40 mm und einer Federkraft R = 0,19 N/mm verwendet, welche auf 15,5 mm ≡ 2,95 N vorgespannt wurden. Der Arbeitsdruck bei Abluft berechnet sich dann wie folgt: Bei einem Druck von 1 bar = 10 N/cm² auf die Querschnittsfläche der vier Öffnungen 23a bis d ergibt sich eine auf die Dichtung 31 ausgeübte Kraft von 10 N/cm² x 9,7 cm² = 97 N. Daraus ergibt sich mit einfacher Dreisatzrechnung, daß eine Kraft von 2,95 N, die nötig ist, um die Federkraft zu überwinden, bei einem Druck von 0,03 bar ausgeübt wird. Der Arbeitsdruck bei Abluft beträgt demnach 0,03 bar. Entsprechend berechnet sich der Arbeitsdruck bei zuströmender Luft. Bei einem Druck von 1 bar = 10 N/cm² auf die Querschnittsfläche der zentralen Öffnung 22 ergibt sich eine auf die Dichtung 31 ausgeübte Kraft von 10 N/cm² x 9 cm² = 90 N. Daraus ergibt sich ebenfalls mit einfacher Dreisatzrechnung, daß eine Kraft von 2,95 N, die nötig ist, um die Federkraft zu überwinden, bei einem Druck von 0,033 bar ausgeübt wird. Der Arbeitsdruck bei zuströmender Luft beträgt demnach 0,033 bar.

## Patentansprüche

1. Luftventil (10) mit einem ein Gehäuseunterteil (12) und ein Gehäuseoberteil (14) aufweisenden Ventilgehäuse (11), wobei das Gehäuseunterteil (12) eine Zuluftöffnung (13) und das Gehäuseoberteil (14) eine Abluftöffnung (15) aufweisen und das Ventilgehäuse (11) ein Ventilsystem (20) umschließt, dadurch gekennzeichnet, daß das Ventilsystem (20) ein Verschlußelement (21) mit mindestens zwei Öffnungen (22, 23a-d) aufweist, wobei eine oder mehrere Öffnungen (22, 23 a-d) zuluftseitig und die verbleibende Öffnung bzw. die verbleibenden Öffnungen abluftseitig durch Dichtungen (30, 31) verschlossen sind, durch Beaufschlagung mit Überdruck oder Unterdruck entfernbar sind.

2. Luftventil nach Anspruch 1, dadurch gekennzeichnet, daß die Dichtungen (30, 31) des Ventilsystems (20) zuluftseitig durch Beaufschlagung mit Überdruck und abluftseitig durch Beaufschlagung mit Unterdruck entfernbar sind.

3. Luftventil nach einem der vorhergehenden Ansprüche, dadurch gekennzeichnet, daß das Verschlußelement eine Luftscheibe (21) mit Öffnungen (22, 23a-d) ist.

4. Luftventil nach Anspruch 3, dadurch gekennzeichnet, daß die Luftscheibe (21) eine zentrale Öffnung (22) und mindestens eine periphere Öffnung (23 a-d) aufweist.

5. Luftventil nach einem der vorhergehenden Ansprüche, dadurch gekennzeichnet, daß im Ventilsystem (20) ferner elastische Elemente (38, 39) vorgesehen sind, welche die Dichtungen (30, 31) gegen das Verschlußelement (21) pressen.

6. Luftventil nach Anspruch 5, dadurch gekennzeichnet, daß die elastischen Elemente (38, 39) auf ihrer der jeweiligen Dichtung (30, 31) abgewandten Seite mit einem längsverschieblichen, mindestens je eine Öffnung (36) aufweisenden Führungselement (34, 35) fest verbunden sind.

7. Luftventil nach einem der Ansprüche 4 bis 6, dadurch gekennzeichnet, daß ein weiteres, mindestens eine Öffnung (33) aufweisendes Führungselement (32) vorgesehen ist, welches mit einer Dichtung (31) einerseits und einem elastischen Element (39) andererseits verbunden ist.

8. Luftventil nach einem der Ansprüche 6 und 7, dadurch gekennzeichnet, daß es sich bei den Führungselementen des Ventilsystems (20) um Führungsscheiben (32, 34, 35) handelt.

9. Luftventil nach einem der vorhergehenden Ansprüche, dadurch gekennzeichnet, daß das Ventilsystem (20) eine entlang der Längsachse des Ventilgehäuses (11) Führungsnadel (40) aufweist, entlang derer die weiteren Elemente des Ventilsystems (20) angeordnet sind.

10. Verwendung des Luftventils (10) nach einem der vorhergehenden Ansprüche in Lüftungsanlagen, vorzugsweise für Behälter, bspw. in Tanklüftungsanlagen für den Heizungsbau.
